# EUROPÄISCHE PATENTSCHRIFT

(11) **EP 4 107 842 B1**
(45) Veröffentlichungstag und Bekanntmachung des Hinweises auf die Patenterteilung: **08.07.2026**
(21) Anmeldenummer: 21706505.1
(22) Anmeldetag: 15.02.2021
(51) Int. Cl.: H02K 1/14, H02K 1/18

(54) **STATORANORDNUNG UND VERFAHREN ZUM BEFESTIGEN EINES BLECHPAKETS**
STATOR ARRANGEMENT AND METHOD FOR SECURING A LAMINATED CORE
AGENCEMENT DE STATOR ET PROCÉDÉ DE FIXATION D'UN NOYAU STRATIFIÉ

(30) Priorität: 19.02.2020 DE 102020202066; 11.02.2021 DE 102021201313
(43) Veröffentlichungstag der Anmeldung: 28.12.2022
(73) Patentinhaber: Robert Bosch GmbH, 70442 Stuttgart (DE)
(72) Erfinder: SZENTIRMAI, Zoltan, 1138 Budapest (HU); KOENINGER, Volker, 77876 Kappelrodeck (DE); VINCZE, Karoly, 1203 Budapest (HU); KUENZEL, Gerald, 77839 Lichtenau (DE)
(86) Internationale Anmeldenummer: PCT/EP2021/053584
(87) Internationale Veröffentlichungsnummer: WO 2021/165176

(56) Entgegenhaltungen:
- DE-A1- 102008 001 095
- US-A1- 2009 295 243

## Beschreibung

Die Erfindung betrifft eine Statoranordnung, aufweisend eine Vielzahl von Blechen, welche zu einem Blechpaket als Statorkern gestapelt sind, wobei auf dem Statorkern Spulenaufnahmen zum Aufnehmen von Statorwicklungen ausgebildet sind und der Statorkern auf einem Motorträger mit mindestens einem Lagersitz angeordnet ist. Des Weiteren betrifft die Erfindung ein Verfahren zum Befestigen eines Blechpakets. Ferner betrifft die Erfindung eine elektrische Maschine, insbesondere ein bürstenloser Elektromotor, mit einer Statoranordnung.

### Stand der Technik

Es sind bereits unterschiedliche Bauarten von Elektromotoren bekannt. Beispielsweise können Elektromotoren als Innenläufer oder Außenläufer gebaut sein. Bei einer Bauart des Elektromotors als Außenläufer umgibt der Rotor radial den Stator. Üblicherweise sind derartige Elektromotoren als bürstenlose Motoren ausgestaltet. Dabei weist der Stator mehrere Statorwicklungen auf. Der Rotor kann dabei Permanentmagneten aufweisen, welche durch ein elektrisches Ansteuern der Statorwicklungen zum Drehen des Rotors mit Magnetfeldern beaufschlagbar sind. Die US 2009/0295243 A1 zeigt beispielsweise einen solchen Elektromotor.

Die Statorwicklungen werden regulär um einen Statorkern angeordnet, um die erzeugbaren Magnetfelder zu bündeln und zu verstärken. Dabei werden zum Reduzieren von Verlusten Blechpakete zu einem Statorkern gestapelt. Die Blechpakete werden anschließend auf einem Motorträger angeordnet und mit dem Motorträger verstemmt. Der Motorträger dient dabei zum Aufnehmen der Kugellager und der Welle des Rotors. Durch das Verstemmen der Blechpakete des Stators können die in den Motorträger eingebrachten Lagersitze deformiert werden. Durch eine derartige Deformierung des Motorträgers liegen die Abmessungen des Lagersitzes nicht mehr im gewünschten Toleranzbereich. Hierdurch kann ein Entnehmen von eingesetzten Kugellagern erschwert oder ein Nachbearbeiten der Lagersitze zum Einsetzen der Kugellager notwendig sein.

### Offenbarung der Erfindung

Die der Erfindung zugrundeliegende Aufgabe kann darin gesehen werden, eine Statoranordnung, eine elektrische Maschine und ein Verfahren zum Verstemmen von Blechpaketen eines Statorkerns vorzuschlagen, welche eine Deformation von Lagersitzen eines Motorträgers verhindern.

Diese Aufgabe wird mittels des jeweiligen Gegenstands der unabhängigen Ansprüche 1 und 7 gelöst. Vorteilhafte Ausgestaltungen der Erfindung sind Gegenstand von jeweils abhängigen Unteransprüchen.

Nach einem Aspekt der Erfindung wird eine Statoranordnung, aufweisend eine Vielzahl von Blechen, welche zu einem Blechpaket als Statorkern gestapelt sind, bereitgestellt. Auf dem Statorkern sind Spulenaufnahmen zum Aufnehmen von Statorwicklungen ausgebildet.

Der Statorkern ist auf einem Motorträger mit mindestens einem Lagersitz angeordnet. Der Lagersitz des Motorträgers ist gegenüber dem Statorkern zentriert ausgebildet.

Der Statorkern weist radial zum Lagersitz ausgerichtete Vorsprünge auf, welche in axial ausgebildete Ausnehmungen des Motorträgers hineinragen. Mindestens ein Vorsprung des Statorkerns ist durch mindestens eine Druckbeaufschlagung mindestens eines Stempelwerkzeugs an zwei gegenüberliegenden Seitenabschnitten mit mindestens einer Ausnehmung des Motorträgers verstemmbar.

Die sich axial erstreckenden Ausnehmungen bilden Führungsnuten zum Aufnehmen und Führen der Vorsprünge bei der Montage aus. Hierdurch können die Bleche bzw. Lamellen des Statorkerns einzeln oder als Blechpaket am Motorträger positioniert werden.

Die Vorsprünge können im Wesentlich rechteckig, abgerundet, trapezförmig oder quadratisch geformt sein und radial zumindest bereichsweise in die Ausnehmungen hineinragen.

Vorzugsweise kann zwischen dem Motorträger und den Vorsprüngen ein radialer Abstand eingehalten werden, um eine mechanische Einwirkung während eines Verstemmens auf den Motorträger zu vermeiden.

Die Vorsprünge werden derart durch ein oder mehrere Stempelwerkzeuge verstemmt, dass die Seitenabschnitte der Vorsprünge gegen die Seitenwände der Ausnehmung des Motorträgers gepresst werden.

Dabei kann eine radial in den Motorträger und auf den Lagersitz des Motorträgers gerichtete mechanische Beanspruchung durch die Verstemmung vermieden werden, wenn die Seitenabschnitte der Vorsprünge durch das Stempelwerkzeug tangential oder in Umfangsrichtung verformt werden und somit in der Ausnehmung seitlich verkanten.

Die Verkantung der Seitenabschnitte der Vorsprünge kann besonders präzise durch lokales Einpressen des Stempelwerkzeugs und/oder durch ein ausreichendes radiales Beabstanden der Vorsprünge des Statorkerns von einer dem Lagersitz zugewandten Wand des Motorträgers erfolgen.

Durch ein axiales Eindringen mindestens eines Stempelwerkzeugs bzw. Verstemmungswerkzeugs in mindestens einen Vorsprung des Statorkerns kann eine tangentiale Verformung der Vorsprünge und eine Verkeilung bzw. Verkantung des Statorkerns an den Seitenabschnitten der Vorsprünge realisiert werden. Hierzu können die Vorsprünge an den Seitenabschnitten das Material des Motorträgers berühren oder mit dem Material des Motorträgers plastisch verformen.

Eine derartige tangential gerichtete Verstemmung der Vorsprünge mit den Seitenwänden der Ausnehmung des Motorträgers kann eine Deformation des Lagersitzes des Motorträgers vermeiden bzw. vorbeugen, da radial in Richtung des Motorträgers gerichtete mechanische Belastungen minimiert oder verhindert werden.

Bei einem Ausführungsbeispiel weisen die Vorsprünge des Statorkerns in einem am Motorträger positionierten und unverstemmten Zustand des Statorkerns einen Radialabstand zum Motorträger und einen Seitenabstand zu Seitenwänden der Ausnehmungen auf. Bevorzugterweise ist der Radialabstand größer als der Seitenabstand ausgebildet. Ist der Statorkern auf dem Motorträger angeordnet, ragen die Vorsprünge zumindest bereichsweise in die Ausnehmungen des Motorträgers hinein. Hierbei ist in einer radialen Querschnittsebene ein Abstand der Vorsprünge in Richtung des Lagersitzes des Motorträgers, der Radialabstand, vorgesehen. Dieser Radialabstand verhindert, dass bei einem Einwirken des Stempelwerkzeugs das Material der Vorsprünge verdrängt wird und radial gegen das Material des Motorträgers drückt. Der Radialabstand dient somit als Sicherheitsabstand und kann über eine gesamte Breite einer Ausnehmung konstant sein oder entlang der Breite variieren.

Die Breite der Ausnehmung kann vorzugsweise einer Breite der Vorsprünge entsprechen. Es kann ein minimaler Seitenabstand zwischen den Seitenwänden der Ausnehmungen und den Seitenabschnitten der Vorsprünge vorgesehen sein.

Es kann eine Zentrierfunktion der Vorsprünge an dem Motorträger über die Breite der Ausnehmungen erfolgen.

Wird das Stempelwerkzeug in das Material der Vorsprünge gepresst, gelangt das Material an den Seitenabschnitten der Vorsprünge bei einer Verdrängung des Materials zuerst in Kontakt mit dem Material des Motorträgers an Seitenwänden der Ausnehmung. Dabei können sich die Vorsprünge tangential bzw. seitlich in den Ausnehmungen festsetzen.

Die dem Lagersitz einer Rotorwelle zugewandte Fläche der Ausnehmung wird vorzugsweise während des Verstemmens nicht durch das Material des Statorkerns berührt.

Nach einer weiteren Ausführungsform sind die Vorsprünge des Statorkerns und die korrespondierenden Ausnehmungen des Motorträgers gleichmäßig entlang eines Umfangs des Motorträgers angeordnet. Vorzugsweise können die Vorsprünge und die korrespondierenden Ausnehmungen des Motorträgers symmetrisch, insbesondere entlang einer Rotationsachse rotationssymmetrisch, ausgestaltet sein.

Beispielsweise kann die Anzahl der Vorsprünge und der Ausnehmungen gerade sein, sodass jeweils zwei Vorsprünge und Ausnehmungen gegenüberliegend angeordnet sind.

Durch die gleichmäßige Verteilung der Vorsprünge des Statorkerns und der Ausnehmungen des Motorträgers kann eine gleichmäßige Gewichtsverteilung und eine optimale mechanische Stabilität der Statoranordnung gewährleistet werden.

Erfindungsgemäß weisen die Ausnehmungen des Motorträgers im Bereich der Seitenabschnitte ausgebildete und radial zur Lageraufnahme gerichtete Ausgleichsvertiefungen auf. Dabei kann in jeder Ausnehmung mindestens ein, vorzugsweise zwei, Ausgleichsvertiefungen vorgesehen sein.

Bei einer Verstemmung des Statorkerns im Bereich der Seitenabschnitte der Vorsprünge wird ein Stempelwerkzeug an zwei Punkten entlang einer Oberfläche des jeweiligen Vorsprungs angesetzt und in das Material des Statorkerns gepresst. Hierbei entstehen an den Seitenabschnitten des Vorsprungs lokale Materialverdickungen, welche die Seitenabschnitte gegen das Material des Motorträgers drücken.

Die Ausgleichsvertiefungen dienen der Minimierung einer Druckkomponente in Richtung des Lagersitzes. Dabei kann sich das Material des Statorkerns während des Verstemmens in die Ausgleichsvertiefungen ausdehnen, wobei die radial nach innen zur Rotorwelle wirkende Belastung des Motorträgers minimiert wird.

Nach einer weiteren Ausführungsform ist in mindestens einer Ausnehmung des Motorträgers ein Abstandselement zum Ausrichten des Statorkerns ausgebildet. Das Abstandselement kann beispielsweise eine zum Lagersitz zugewandte Fläche bzw. Wand der Ausnehmung in zwei Abschnitte mit Ausgleichsvertiefungen unterteilen. Durch das Abstandselement kann eine zusätzliche Zentrierfunktion durch den Motorträger bereitgestellt werden, welche ein präzises Anordnen des Statorkerns ermöglicht.

Gemäß einem weiteren Ausführungsbeispiel sind die Bleche des Statorkerns als Lamellen ausgestaltet und bestehen aus einem Stahl. Bevorzugterweise ist der Motorträger aus einem Metall oder einem Kunststoff hergestellt. Insbesondere kann der Motorträger aus einem Guß- oder Spritzgußverfahren hergestellt sein. Hierzu kann das Material des Motorträgers auch Aluminium bzw. eine Aluminiumlegierung sein.

Nach einem weiteren Aspekt der Erfindung wird ein Verfahren zum Befestigen eines Blechpakets, insbesondere eines Statorkerns, an einem Motorträger bereitgestellt.

In einem Schritt wird ein aus mehreren vorgestanzten Blechen bestehendes Blechpaket auf dem Motorträger gegenüber einem Lagersitz des Motorträgers zentriert angeordnet, wobei radial in Richtung des Lagersitzes ausgebildete Vorsprung des Blechpakets in korrespondierende, sich axial erstreckende, Ausnehmungen des Motorträgers hineinragen.

Die Bleche sind vorzugsweise vorgestanzt und können einzeln oder in zu einem Blechpaket zusammengesetzten Zustand auf den Motorträger aufgesetzt werden. Bei dem Aufsetzen des Blechpakets, welches als ein Statorkern ausgestaltet sein kann, werden die Bleche gegenüber einem Lagersitz des Motorträgers zentriert.

In einem weiteren Schritt wird mindestens ein Stempelwerkzeug an mindestens einem Vorsprung des Blechpakets angesetzt. Anschließend wird das Stempelwerkzeug durch Druckeinwirkung derart in ein Material des Vorsprungs gepresst, dass der Vorsprung an Seitenabschnitten mit den Ausnehmungen des Motorträgers verstemmt wird. Vorzugsweise werden die Seitenabschnitte des Vorsprungs mit Seitenwänden der Ausnehmung durch das Verstemmen reibschlüssig und/oder kraftschlüssig verbunden.

Durch das Verfahren kann ein Statorkern mit einem Motorträger dauerhaft verbunden werden. Dabei können auch unterschiedliche Materialen verwendet werden, welche insbesondere miteinander nicht lötbar oder schweißbar sind.

Durch die Verstemmung an den Seitenabschnitten mindestens eines Vorsprungs wird der jeweilige Vorsprung tangential aufgeweitet, sodass eine Verbindung zwischen dem Vorsprung und der Ausnehmung entsteht. Beispielsweise kann eine Verstemmung an zwei oder mehr Vorsprüngen und den korrespondierenden Ausnehmungen vorgenommen werden. Vorzugsweise erfolgt ein Verbinden in Umfangsrichtung mit den Seitenwänden der Ausnehmung.

Es kann eine radial in Richtung des Motorträgers gerichtete Krafteinwirkung vermieden werden, durch welche der Motorträger verformt und eine Aufnahme einer Rotorwelle und/oder mindestens eines Lagers verhindert wird.

Gemäß einem Ausführungsbeispiel wird das Stempelwerkzeug zentriert oder dezentriert an den Seitenabschnitten in den Vorsprung gepresst. Beispielsweise kann das Stempelwerkzeug einen Einpressdorn aufweisen, welcher in das Material eines oder mehrerer Vorsprünge des Statorkerns eingepresst wird.

Dabei kann entlang einer Oberfläche eines Vorsprungs der Einpressdorn zentriert oder dezentriert eingepresst werden. Beispielsweise kann der Einpressdorn im Bereich eines Seitenabschnitts des Vorsprungs angesetzt werden.

Das Stempelwerkzeug kann ein oder mehrere Einpressdorne aufweisen.

Alternativ können mehrere Stempelwerkzeuge mit jeweils einem Einpressdorn oder ein Stempelwerkzeug mit einem Einpressdorn mehrmals angesetzt werden, um die Oberfläche des mindestens einen Vorsprungs des Statorkerns mit Druck zu beaufschlagen und eine Verbindung zum Motorträger zu realisieren. Insbesondere kann das Verstemmen durch das Einbringen von einem oder mehreren Einpresspunkten in die Oberfläche des Vorsprungs erfolgen. Die Einpresspunkte können seitlich bzw. im Bereich der Seitenabschnitte des Vorsprungs oder zentriert in die Oberfläche des Vorsprungs durch das mindestens eine Stempelwerkzeug eingepresst werden.

Alternativ kann ein Stempelwerkzeug mit zwei oder mehr Einpressdornen eingesetzt werden, um das Verstemmen in einem Arbeitsvorgang zu erledigen.

Ferner betrifft die Erfindung eine elektrische Maschine, insbesondere einen bürstenlosen Elektromotor, vorzugsweise einen elektrisch kommutierten Elektromotor. Die elektrische Maschine umfasst eine erfindungsgemäße Statoranordnung und einen gegenüber der Statoranordnung drehbar ausgebildeten Rotor. Der Rotor ist insbesondere als Außenläufer ausgebildet.

Der Rotor weist insbesondere Magnete, vorzugsweise Permanentmagneten auf. Ein elektrisches bestromen der Statorwicklungen der Statoranordnung führen zur Erzeugung von Magnetfeldern die wiederum eine Drehbewegung des Rotors bewirken.

Die Statoranordnung der elektrischen Maschine weist eine Vielzahl von Blechen, welche zu einem Blechpaket als Statorkern gestapelt sind auf. Auf dem Statorkern sind Spulenaufnahmen zum Aufnehmen von Statorwicklungen ausgebildet. Der Statorkern ist auf einem Motorträger mit mindestens einem Lagersitz angeordnet ist, wobei der Statorkern gegenüber dem Lagersitz des Motorträgers zentriert positioniert ist. Vorteilhaft ist, dass der Statorkern radial zum Lagersitz ausgerichtete Vorsprünge aufweist, welche in axial ausgebildete Ausnehmungen des Motorträgers hineinragen. Vorteilhaft ist mindestens ein Vorsprung des Statorkerns durch, insbesondere mindestens eine Druckbeaufschlagung, insbesondere mindestens eines Stempelwerkzeugs, an insbesondere zwei gegenüberliegenden Seitenabschnitten des Vorsprungs mit mindestens einer Ausnehmung des Motorträgers verstemmbar, vorzugsweise verstemmt.

Gemäß einer vorteilhaften Weiterbildung ist die Statoranordnung Teil einer elektrischen Maschine zum Antreiben einer Pumpe oder eines Lüfters. Insbesondere ist die elektrische Maschine Teil einer Pumpe oder eines Lüfters. Vorzugsweise ist die Statoranordnung Teil einer Pumpe oder eines Lüfters, insbesondere eines Lüfterantriebs.

Weiterbildungen der Statoranordnung der elektrischen Maschine ergeben sich aus den Ausführungen zu der Statoranordnung.

Im Folgenden werden anhand von stark vereinfachten schematischen Darstellungen bevorzugte Ausführungsbeispiele der Erfindung näher erläutert.

### Hierbei zeigen

- Fig. 1: eine schematische Draufsicht auf eine Statoranordnung gemäß einer Ausführungsform und
- Fig. 2: ein schematisches Ablaufdiagramm zum Veranschaulichen eines Verfahrens zum Befestigen eines Blechpakets.

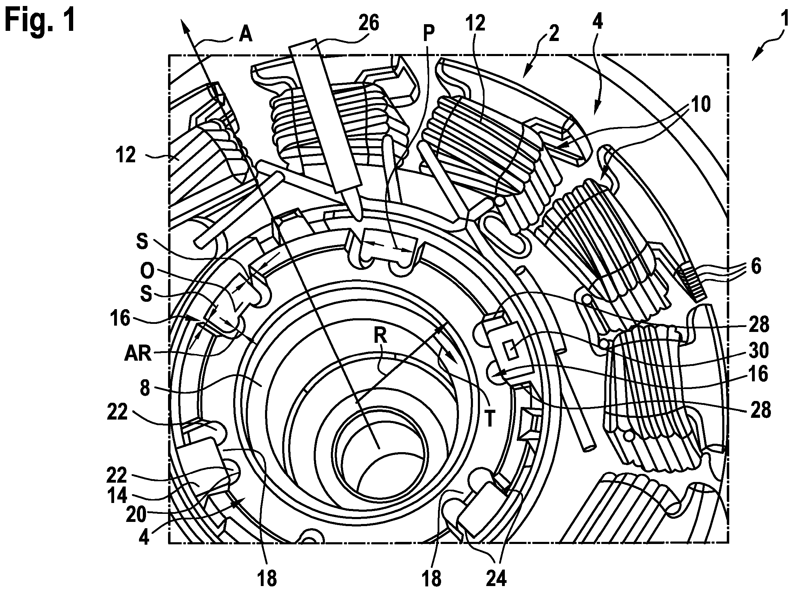

Die Figur 1 zeigt eine schematische Draufsicht auf eine Statoranordnung 1 gemäß einer Ausführungsform. Die Statoranordnung 1 ist beispielsweise Bestandteil eines Elektromotors in einer Außenläuferbauweise. Der Übersicht halber ist ein Rotor des Elektromotors nicht dargestellt. Der Elektromotor weist die Statoranordnung 1 auf.

Die Statoranordnung 1 weist einen Stator mit einem Statorkern 2 auf. Der Statorkern 2 ist auf einem Motorträger 4 zentriert angeordnet. Der Statorkern 2 ist als ein Blechpaket aus mehreren in Axialrichtung A gestapelten Blechen 6 ausgestaltet.

Der Statorkern 2 umgibt dabei umfangsseitig einen Abschnitt des Motorträgers 4, in welchem ein Lagersitz 8 zum Aufnehmen von Kugellagern vorgesehen ist. Hierbei kann eine nicht dargestellte Rotorwelle drehbar entlang der Axialachse A bzw. Axialrichtung A gelagert werden.

Des Weiteren sind über dem Statorkern 2 Spulenaufnahmen 10 zum Aufnehmen von Statorwicklungen 12 ausgebildet. Die Spulenaufnahmen 10 zeigen in Radialrichtung R weg von dem Lagersitz 8 und sind entlang eines Umfangs des Statorkerns 2 verteilt. Die Spulenaufnahmen 10 bilden insbesondere Statorzähne. Die Spulenaufnahmen umfassen einen Statorzahnschaft, um den mindestens eine Statorwicklung gewickelt ist. An dem freien Ende der Spulenaufnahmen 10 sind Statorzahnköpfe ausgebildet, welche insbesondere ein Abrutschen der Statorwicklungen 12 in Radialrichtung verhindern. Die Statorwicklungen 12 sind hierbei um die Spulenaufnahmen 10 gewickelt.

Der Statorkern 2 weist radial zum Lagersitz 8 gerichtete Vorsprünge 14 auf. Im dargestellten Ausführungsbeispiel sind sechs Vorsprünge 14 ausgebildet, welche in Richtung der Axialachse A zeigen. Die Vorsprünge 14 weisen im Wesentlichen einen rechteckigen Querschnitt auf und ragen zumindest bereichsweise in Ausnehmungen 16 des Motorträgers 4 hinein. Die Vorsprünge weisen, insbesondere zueinander in Umfangrichtung, einen gleichbleibenden Abstand auf. Die Anzahl der Vorsprünge 14 kann beispielsweise erhöht oder insbesondere auf zwei, vorzugsweise auf drei, verringert werden.

Die Ausnehmungen 16 des Motorträgers 4 verlaufen in Axialrichtung A und dienen der Ausrichtung des Statorkerns 2. Vorzugsweise erstrecken sich die Ausnehmungen 16 in Axialrichtung lediglich über eine Teilerstreckung der Statorkerns 2. Insbesondere ist die Erstreckung der Ausnehmung 16 in Axialrichtung gleich oder größer, insbesondere minimal größer als die Erstreckung des, insbesondere zugehörigen, Vorsprungs 14.

Vorzugsweise erstreckt sich einer, vorzugsweise alle, Vorsprünge 14 in Axialrichtung lediglich über einen Teil der Erstreckung des Statorkerns 2.

In den Ausnehmungen 16 des Motorträgers 4 sind Abstandselemente 18 zum Ausrichten des Statorkerns 2 ausgebildet. Die Abstandselemente 18 können beispielsweise eine zum Lagersitz 8 zugewandte Fläche bzw. Wand 20 einer Ausnehmung 16 in zwei Abschnitte mit Ausgleichsvertiefungen 22 unterteilen. Die Ausgleichsvertiefungen 22 sind insbesondere Halbzylinderförmig ausgebildet. Sie weisen einen Querschnitt mit einer Halbkreisform auf.

Gemäß einer Weiterbildung können die Ausgleichsvertiefungen 22 einen dreieckigen oder rechteckigen Querschnitt aufweisen.

Die Ausgleichsvertiefungen 22 sind in einem Bereich von Seitenabschnitten 24 der Vorsprünge 14 ausgebildet und ragen radial zur Lageraufnahme bzw. Lagersitz 8 in ein Material des Motorträgers 4 hinein.

Vorzugsweise bilden die Ausnehmungen 16 und das dazwischen ausgebildete Abstandselement 18 einen UU-förmigen Querschnitt.

Wird ein Stempelwerkzeug 26 in das Material der Vorsprünge 14 gepresst, gelangt das Material an den Seitenabschnitten 24 der Vorsprünge 14 zuerst in Kontakt mit dem Material des Motorträgers 4 an Seitenwänden 28 der Ausnehmung 16. Dabei können sich die Vorsprünge 14 bei einem Verstemmen in Tangentialrichtung T bzw. seitlich in den Ausnehmungen 16 festsetzen.

Das Material des Vorsprungs 14 kommt insbesondere zuerst in Umfangsrichtung und entgegen der Umfangsrichtung mit den Motorträger 4 in Kontakt.

Das Stempelwerkzeug 26 kann beispielsweise an einem oder mehreren Einpresspunkten 30 an mindestens einem Vorsprung 14 angesetzt werden. Im dargestellten Ausführungsbeispiel ist beispielhaft ein Einpresspunkt 30 veranschaulicht, welcher auf einer Oberfläche O des Vorsprungs 14 zentriert zwischen zwei Seitenabschnitten 24 des Vorsprungs 14 angeordnet ist. Durch das Einbringen des Einpresspunktes 30 durch das Stempelwerkzeug 26 können die Seitenabschnitte 24 des Vorsprungs 14 mit den Seitenwänden 28 der Ausnehmung 16 verbunden werden. Durch eine oder mehrere derartige Verbindungen wird der Statorkern 2 mit dem Motorträger 4 verbunden.

Vorzugsweise weisen die Vorsprünge 14 des Statorkerns 2 in einem am Motorträger 4 positionierten und unverstemmten Zustand des Statorkerns 2 einen Radialabstand AR zum Motorträger 4 bzw. der dem Lagersitz 8 zugewandten Wand 20 der Ausnehmung 16 und einen Seitenabstand S zu Seitenwänden 28 der Ausnehmung 16 auf. Bevorzugterweise ist der Radialabstand AR größer als der Seitenabstand S ausgebildet.

Die Vorsprünge 14 weisen vorzugsweise einen im Wesentlichen rechteckigen Querschnitt auf. Wobei die Querschnittsebene senkrecht zur Längsachse A ausgebildet ist. Eine Entsprechende Ausbildung ist beispielhaft in Figur 1 bei vier der sechs Vorsprünge 14 gezeigt.

Bei einer alternativen oder Zusätzlichen Ausbildung weisen die Vorsprünge ein oder zwei halbzylinderförmige Ausformungen auf, welche insbesondere im montierten Zustand jeweils in eine Ausgleichsvertiefungen 22 eingreift. Es wird hierdurch eine verbesserte Positionierung in Umfangsrichtung erreicht. Vorzugsweise ist der Abstand AR größer als der Seitenabstand S bei einer Ausbildung der Vorsprünge 14 mit halbzylinderförmigen Ausbildungen.

Ein größerer Radialabstand gegenüber dem Seitenabstand S bewirkt, dass sich beim Verstemmen das Material Vorsprünge zuerst einen Kontakt, bzw. eine Verbindung mit den Seitenwänden 28 herstellt.

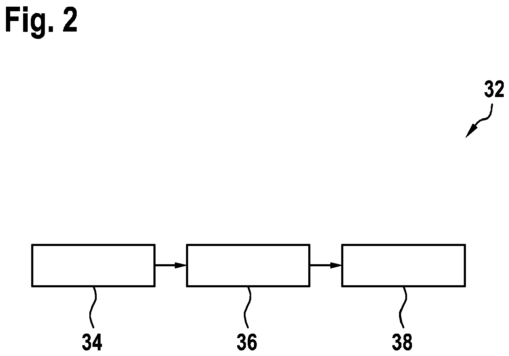

In der Figur 2 ist ein schematisches Ablaufdiagramm zum Veranschaulichen eines Verfahrens 32 zum Befestigen eines Blechpakets 2 dargestellt. Das Blechpaket 2 ist beispielsweise als ein Statorkern ausgestaltet und kann an dem Motorträger 4 befestigt werden. Dabei dient der Motorträger 4 als ein Beispiel für das Verfahren 32, welches nicht auf den technischen Bereich von Elektromotoren beschränkt ist.

In einem Schritt 34 wird ein aus mehreren vorgestanzten Blechen 6 bestehendes Blechpaket 2 auf dem Motorträger 4 gegenüber einem Lagersitz 8 des Motorträgers 4 zentriert angeordnet. Dabei ragen radial in Richtung des Lagersitzes 8 ausgebildete Vorsprünge 14 des Blechpakets 2 in korrespondierende sich axial erstreckende Ausnehmungen 16 des Motorträgers 4 hinein.

In einem weiteren Schritt 36 wird mindestens ein Stempelwerkzeug 26 an mindestens einem Vorsprung 14 des Blechpakets 2 angesetzt.

Anschließend wird in einem Schritt 38 das Stempelwerkzeug 26 durch Druckeinwirkung derart in ein Material des Vorsprungs 14 gepresst, dass der Vorsprung 14 an Seitenabschnitten 24 mit den Ausnehmungen 16 des Motorträgers 4 verstemmt und somit verbunden wird. Dabei erfolgt durch das Einpressen des Stempelwerkzeugs 26 in die Oberfläche O eines Vorsprungs 14 eine Materialverdrängung des Materials des Vorsprungs 14 bzw. des Statorkerns 2 von dem Einpresspunkt bzw. der Einpressstelle 30 zu den Seitenabschnitten 24 des Vorsprungs 14.

Durch die Verdrängung des Materials resultiert insbesondere eine Verbreiterung des Vorsprungs 14 in Richtung der in Figur 1 gezeigten Pfeile P. Es erfolgt vorzugsweise eine Verbreitung des Vorsprungs in und entgegen der Umfangsrichtung. Durch die Verbreiterung des Vorsprungs 14 entsteht eine unlösbare Verbindung zwischen dem Statorkern 2 und dem Motorträger 4 an dem verstemmten Vorsprung 14. Vorzugsweise werden die Seitenabschnitte 24 der Vorsprünge mit den Seitenwänden 28 verbunden.

Das Verstemmen und die damit verbundende Materialverdrängung bewirkt, dass die Vorsprünge sich in Richtung der Seitenwände 28 der Ausnehmung 16 ausdehnen. Vorteilhaft erfolgt keine, bzw. keine Wesentliche Ausdehnung in Richtung der Mittenachse, bzw. dem Abstandselement 18. Unter keiner Wesentlichen Ausdehnung wird verstanden, dass die Ausdehnung zu einer Verbindung führt, welche ausreicht um den Statorträger drehfest mit dem Motorträger zu verbinden. Vorteilhaft wirkt durch die Verstemmung keine Kraft ausgehend von dem Statorkern 2 in, bzw. entgegen der Radialrichtung auf den Motorträger 4. Es wirkt lediglich eine Kraft in Tangentialrichtung, insbesondere in/entgegen der Umfangsrichtung zwischen dem Statorkern 2 und dem Motorträger 4.

Das Stempelwerkzeug 26 kann in das Material eines oder mehrerer Vorsprünge 14 des Statorkerns 2 eingepresst werden. Dabei kann jeweils ein Vorsprung 14 an einer oder mehreren Positionen durch Druck des Stempelwerkzeugs 26 zumindest bereichsweise plastisch verformt werden.

Die Krafteinwirkung des Stempelwerkzeugs 26 erfolgt entlang der Axialrichtung A. Die resultierende Materialverformung des Materials der Vorsprünge 14 ist in der Figur 1 durch die in Tangentialrichtung T ausgerichteten Pfeile P veranschaulicht. Es kann durch die tangential wirkende Verformung eine radial in Richtung des Motorträgers 4 gerichtete Krafteinwirkung vermieden werden, durch welche der Motorträger 4 verformt und eine Aufnahme einer Rotorwelle und/oder mindestens eines Lagers verhindert wird.

Die Seitenabschnitte 24 eines Vorsprungs 14 zeigen vorzugsweise in und entgegen der Umfangsrichtung. Die Oberfläche der Seitenabschnitte ist in bzw. entgegen der Tangentialrichtung T gerichtet. Der Normalenvektor der Oberfläche der Seitenabschnitte 24 erstreckt in oder entgegen der Umfangsrichtung. Vorzugsweise sind die Seitenabschnitte 24, die Abschnitte des Vorsprungs, die der Mittenachse, insbesondere der Rotorwelle nicht zugerichtet sind.

## Patentansprüche

1. Statoranordnung (1), aufweisend eine Vielzahl von Blechen (6), welche zu einem Blechpaket als Statorkern (2) gestapelt sind, wobei auf dem Statorkern (2) Spulenaufnahmen (10) zum Aufnehmen von Statorwicklungen (12) ausgebildet sind und der Statorkern (2) auf einem Motorträger (4) mit mindestens einem Lagersitz (8) angeordnet ist, wobei der Statorkern (2) gegenüber dem Lagersitz (8) des Motorträgers (4) zentriert positioniert ist, wobei der Statorkern (2) radial zum Lagersitz (8) ausgerichtete Vorsprünge (14) aufweist, welche in axial ausgebildete Ausnehmungen (16) des Motorträgers (4) hineinragen, **dadurch gekennzeichnet, dass** mindestens ein Vorsprung (14) des Statorkerns (2) durch mindestens eine Druckbeaufschlagung an zwei gegenüberliegenden Seitenabschnitten (24) des Vorsprungs (14) mit mindestens einer Ausnehmung (16) des Motorträgers (4) verstemmbar ist, und dass die Ausnehmungen (16) des Motorträgers (4) im Bereich der Seitenabschnitte (24) ausgebildete und radial zum Lagersitz (8) gerichtete Ausgleichsvertiefungen (22) aufweisen.

2. Statoranordnung (1) nach Anspruch 1, wobei die mindestens eine Druckbeaufschlagung mittels mindestens eines Stempelwerkzeugs (26) erfolgt.

3. Statoranordnung nach einem der vorhergehenden Ansprüche, wobei die Vorsprünge (14) des Statorkerns (2) in einem am Motorträger (4) positionierten und unverstemmten Zustand des Statorkerns (2) einen Radialabstand zum Motorträger (2) und einen Seitenabstand zu Seitenwänden (28) der Ausnehmungen (16) des Motorträgers (4) aufweisen, wobei der Radialabstand größer als der Seitenabstand ausgebildet ist.

4. Statoranordnung (1) nach einem der vorhergehenden Ansprüche, wobei die Vorsprünge (14) des Statorkerns (2) und die korrespondierenden Ausnehmungen (16) des Motorträgers (4) gleichmäßig entlang eines Umfangs des Motorträgers (4) angeordnet sind.

5. Statoranordnung (1) nach einem der Ansprüche 1 bis 4, wobei die Bleche (6) des Statorkerns (2) als Lamellen ausgestaltet sind und aus einem Stahl bestehen, wobei der Motorträger (4) aus einem Metall oder einem Kunststoff hergestellt ist.

6. Statoranordnung (1) nach einem der Ansprüche 1 bis 5, wobei in mindestens einer Ausnehmung (16) des Motorträgers (4) ein Abstandselement (18) zum Ausrichten des Statorkerns (2) ausgebildet ist.

7. Verfahren (32) zur Herstellung einer Statoranordnung (1) nach einem der vorhergehenden Ansprüche, wobei das Verfahren ein Befestigen eines Blechpakets (2) eines Statorkerns, an einem Motorträger (4) umfasst, wobei
- ein aus mehreren vorgestanzten Blechen (6) bestehendes Blechpaket (2) auf dem Motorträger (4), beispielsweise gegenüber einem Lagersitz (8) des Motorträgers (4) zentriert, angeordnet wird, wobei radial (R) in Richtung des Lagersitzes (8) ausgebildete Vorsprünge (14) des Blechpakets (2) in korrespondierende sich axial (A) erstreckende Ausnehmungen (16) des Motorträgers (4) hineinragen,
- mindestens ein Stempelwerkzeug (26) an mindestens einem Vorsprung (14) des Blechpakets (2) angesetzt wird,
- das Stempelwerkzeug (26) durch Druckeinwirkung derart in ein Material des Vorsprungs (14) gepresst wird, dass der Vorsprung (14) an Seitenabschnitten (24) mit den Ausnehmungen (16) des Motorträgers (4) verstemmt wird, und dass die Ausnehmungen (16) des Motorträgers (4) im Bereich der Seitenabschnitte (24) ausgebildete und radial zum Lagersitz (8) gerichtete Ausgleichsvertiefungen (22) aufweisen.

8. Verfahren nach Anspruch 7, wobei das Stempelwerkzeug (26) zentriert in einem Bereich der Seitenabschnitte (24) in den Vorsprung (14) gepresst wird.

9. Elektrische Maschine mit einem Rotor und einer Statoranordnung (1) nach einem der Ansprüche 1 bis 6.

## Claims

1. Stator arrangement (1), having a large number of metal sheets (6) which are stacked to form a laminated core as the stator core (2), wherein coil receptacles (10) for receiving stator windings (12) are formed on the stator core (2) and the stator core (2) is arranged on a motor support (4) with at least one bearing seat (8), wherein the stator core (2) is positioned in a centred manner in relation to the bearing seat (8) of the motor support (4), wherein the stator core (2) has projections (14) which are oriented radially with respect to the bearing seat (8) and protrude into axially formed recesses (16) in the motor support (4), **characterized in that** at least one projection (14) of the stator core (2) can be caulked with at least one recess (16) in the motor support (4) by application of pressure at least once to two opposite side portions (24) of the projection (14), and **in that** the recesses (16) in the motor support (4) have compensating depressions (22) formed in the region of the side portions (24) and directed radially with respect to the bearing seat (8).

2. Stator arrangement (1) according to Claim 1, wherein the application of pressure at least once is performed by means of at least one stamping tool (26).

3. Stator arrangement according to either of the preceding claims, wherein the projections (14) of the stator core (2) are at a radial distance from the motor support (2) and a lateral distance from side walls (28) of the recesses (16) in the motor support (4) in a state in which the stator core (2) is positioned on the motor support (4) and is uncaulked, wherein the radial distance is greater than the lateral distance.

4. Stator arrangement (1) according to any of the preceding claims, wherein the projections (14) of the stator core (2) and the corresponding recesses (16) in the motor support (4) are arranged uniformly along a periphery of the motor support (4).

5. Stator arrangement (1) according to any of Claims 1 to 4, wherein the metal sheets (6) of the stator core (2) are designed as laminates and consist of a steel, wherein the motor support (4) is produced from a metal or a plastic.

6. Stator arrangement (1) according to any of Claims 1 to 5, wherein a spacer element (18) for orienting the stator core (2) is formed in at least one recess (16) in the motor support (4).

7. Method (32) for producing a stator arrangement (1) according to any of the preceding claims, wherein the method comprises fastening a laminated core (2) of a stator core to a motor support (4), wherein
- a laminated core (2) consisting of several pre-punched metal sheets (6) is arranged on the motor support (4), for example centred in relation to a bearing seat (8) of the motor support (4), wherein projections (14) of the laminated core (2) formed radially (R) in the direction of the bearing seat (8) protrude into corresponding axially (A) extending recesses (16) in the motor support (4),
- at least one stamping tool (26) is attached to at least one projection (14) of the laminated core (2),
- the stamping tool (26) is pressed by the action of pressure into a material of the projection (14) in such a way that the projection (14), at side portions (24), is caulked with the recesses (16) in the motor support (4), and that the recesses (16) in the motor support (4) have compensating depressions (22) formed in the region of the side portions (24) and directed radially with respect to the bearing seat (8).

8. Method according to Claim 7, wherein the stamping tool (26) is pressed into the projection (14) in a manner centred in a region of the side portions (24).

9. Electric machine having a rotor and a stator arrangement (1) according to any of Claims 1 to 6.

## Revendications

1. Agencement de stator (1) comportant une pluralité de tôles (6) empilées pour former un paquet de tôles en tant que noyau de stator (2), des logements de bobine (10) destinés à recevoir des enroulements de stator (12) étant réalisés sur le noyau de stator (2) et le noyau de stator (2) étant disposé sur un support de moteur (4) comprenant au moins un siège de palier (8), le noyau de stator (2) étant centré par rapport au siège de palier (8) du support de moteur (4), le noyau de stator (2) présentant des parties saillantes (14) orientées radialement par rapport au siège de palier (8) et faisant saillie dans des évidements (16) réalisés axialement du support de moteur (4), **caractérisé en ce qu'**au moins une partie saillante (14) du noyau de stator (2) peut être matée avec au moins un évidement (16) du support de moteur (4) par au moins une application de pression sur deux parties latérales opposées (24) de la partie saillante (14), et **en ce que** les évidements (16) du support de moteur (4) présentent des creux de compensation (22) réalisés dans la zone des parties latérales (24) et dirigés radialement par rapport au siège de palier (8).

2. Agencement de stator (1) selon la revendication 1, dans lequel ladite au moins une application de pression s'effectue au moyen d'au moins un outil de poinçonnage (26).

3. Agencement de stator selon l'une quelconque des revendications précédentes, dans lequel les parties saillantes (14) du noyau de stator (2) présentent, dans un état positionné sur le support de moteur (4) et non maté du noyau de stator (2), une distance radiale par rapport au support de moteur (2) et une distance latérale par rapport aux parois latérales (28) des évidements (16) du support de moteur (4), la distance radiale étant fixée de manière à être supérieure à la distance latérale.

4. Agencement de stator (1) selon l'une quelconque des revendications précédentes, dans lequel les parties saillantes (14) du noyau de stator (2) et les évidements correspondants (16) du support de moteur (4) sont disposés régulièrement le long d'une circonférence du support de moteur (4).

5. Agencement de stator (1) selon l'une quelconque des revendications 1 à 4, dans lequel les tôles (6) du noyau de stator (2) sont conçues sous forme de lamelles et sont constituées d'acier, le support de moteur (4) étant fabriqué en métal ou en matière plastique.

6. Agencement de stator (1) selon l'une quelconque des revendications 1 à 5, dans lequel un élément d'écartement (18) pour l'alignement du noyau de stator (2) est réalisé dans au moins un évidement (16) du support de moteur (4).

7. Procédé (32) pour produire un agencement de stator (1) selon l'une quelconque des revendications précédentes, le procédé comprenant la fixation d'un paquet de tôles (2) d'un noyau de stator à un support de moteur (4), dans lequel
- un paquet de tôles (2) constitué d'une pluralité de tôles prédécoupées (6) est disposé sur le support de moteur (4), par exemple centré par rapport à un siège de palier (8) du support de moteur (4), des parties saillantes (14) du paquet de tôles (2) réalisées radialement (R) en direction du siège de palier (8) faisant saillie dans des évidements correspondants (16) du support de moteur (4) qui s'étendent axialement (A),
- au moins un outil de poinçonnage (26) est appliqué sur au moins une partie saillante (14) du paquet de tôles (2),
- l'outil de poinçonnage (26) est pressé sous l'effet de la pression dans un matériau de la partie saillante (14) de telle sorte que la partie saillante (14) soit matée au niveau des parties latérales (24) avec les évidements (16) du support de moteur (4), et que les évidements (16) du support de moteur (4) présentent des creux de compensation (22) réalisés dans la zone des parties latérales (24) et dirigés radialement par rapport au siège de palier (8).

8. Procédé selon la revendication 7, dans lequel l'outil de poinçonnage (26) est pressé de manière centrée dans une zone des parties latérales (24) dans la partie saillante (14).

9. Machine électrique comprenasnt un rotor et un agencement de stator (1) selon l'une quelconque des revendications 1 à 6.
